# EUROPÄISCHE PATENTSCHRIFT

(11) **EP 0 511 192 B1**
(45) Veröffentlichungstag und Bekanntmachung des Hinweises auf die Patenterteilung: **27.07.1994**
(21) Anmeldenummer: 92890072.9
(22) Anmeldetag: 27.03.1992
(51) Int. Cl.: B60R 1/06

(54) **Motorisch verstellbarer Spiegel**
Motorized adjustable mirror
Miroir à réglage motorisé

(30) Priorität: 18.04.1991 AT 816/91
(43) Veröffentlichungstag der Anmeldung: 28.10.1992
(73) Patentinhaber: MAGNA AUTECA AUTOZUBEHÖRGESELLSCHAFT M.B.H., A-8160 Weiz (AT)
(72) Erfinder: Rosegger, Otto, A-8200 Urscha Nr. 109 (AT)
(74) Vertreter: Haffner, Thomas M., Dr.

(56) Entgegenhaltungen:
- EP-A- 0 306 728
- EP-A- 0 342 412
- US-A- 3 961 543

## Beschreibung

Die Erfindung bezieht sich auf einen motorisch verstellbaren Spiegel mit einer Befestigungseinrichtung zur Befestigung an einem Kraftfahrzeug, insbesondere Rückspiegel für einen LKW, wobei der Spiegel über zwei voneinander getrennte Antriebsmotoren um einander kreuzende Schwenkachsen schwenkbar angetrieben ist (siehe zum Beispiel EP-A- 0 306 728 und/oder EP-A- 0 342 412).

Motorisch verstellbare Spiegel für Kraftfahrzeuge sind in unterschiedlichen Ausbildungen bekannt geworden. Die Spiegelfläche wurde bei derartigen bekannten Ausbildungen in der Regel um einen gemeinsamen Kugelgelenkpunkt allseitig schwenkbar angelenkt, wobei in der Regel zwei Elektromotoren eine Verschwenkung um zwei voneinander verschiedene Achsen des gleichen Kugelgelenkes bewirken. Für die Ausbildung eines derartigen Kugelgelenkes sind, insbesondere in bezug auf die Vibrationssicherheit, besonders hohe Anforderungen zu stellen, wobei bei überaus geringem Spiel im Kugelgelenk die Verstellkräfte entsprechend wesentlich größer wurden und umgekehrt bei zu großem Spiel am Kreuz- bzw. Kugelgelenk die Gefahr einer Vibration des Spiegels deutlich zunahm. Die Anlenkung der Motoren war darüber hinaus insbesondere bei LKW dynamischen Massenkräften ausgesetzt, sodaß der Verschleiß an einer derartigen Anlenkung vergleichsweise groß ist. Die Störanfälligkeit derartiger bekannter Spiegel hat sich als relativ groß erwiesen und neben einem übermäßigen Verschleiß des Gelenkes war ein wesentlicher Faktor für einen vorzeitigen Ausfall der Ausfall eines oder beider Antriebsmotoren.

Die Erfindung zielt nun darauf ab, einen motorisch verstellbaren Spiegel der eingangs genannten Art zu schaffen, welcher sich durch geringere Neigung zu Vibrationen auszeichnet und bei welchem die Lagerung des Spiegels in einer Weise erfolgt, daß alle im Betrieb auftretenden dynamischen Kräfte weitestgehend verschleißfrei aufgenommen werden können. Weiter zielt die Erfindung darauf ab, die Antriebsmotoren in einer Weise anordnen zu können, daß die dynamischen Kräfte die über den Antrieb zur Wirkung gelangen oder auf den Antrieb einwirken, wesentlich reduziert werden, wodurch die Standzeit wesentlich erhöht wird. Schließlich zielt die Erfindung darauf ab, bei verbesserter Lagerung des Spiegels gleichzeitig eine besonders einfache Montage und eine besonders flache Bauweise sicherzustellen. Zur Lösung dieser Aufgabe besteht die Erfindung ausgehend von einem Spiegel der eingangs genannten Art im wesentlichen darin, daß eine erste Tragplatte für den Spiegel starr mit der Befestigungseinrichtung verbunden ist, daß an dieser ersten Tragplatte eine zweite Tragplatte um eine Achse schwenkbar gelagert ist, an welcher zweiten Tragplatte der Spiegel bzw. das Spiegelgehäuse um eine weitere Achse schwenkbar gelagert ist, und daß je ein Antriebsmotor sowie ein Stellglied für die Verstellbewegung zwischen erster und zweiter Tragplatte und zwischen zweiter Tragplatte und Spiegel bzw. Spiegelgehäuse angeordnet sind. Dadurch, daß anstelle des üblicherweise verwendeten Kugelgelenkes eine Trennung der Kinematik der Schwenkbewegung in zwei voneinander gesonderte Schwenkachsen erfolgt, wird es, möglich, die Lagerung entsprechend günstiger zu dimensionieren, sodaß auch große dynamische Kräfte sicher und zerstörungsfrei aufgenommen werden können. Die Verwendung von zwei gesonderten Tragplatten ermöglicht hiebei in einfacher Weise die raumsparende Unterbringung der Motoren in einer Weise, welche einen großen Verstellwinkel des Spiegels ermöglicht, und die Maßnahme, die erste Tragplatte starr mit der Befestigungseinrichtung zu verbinden, ermöglicht eine Ausbildung, bei welcher mit dieser ersten Tragplatte ein erster Antriebsmotor verbunden ist, wodurch das Gewicht des verstellbaren Teiles des Spiegels wesentlich herabgesetzt wird und die dynamischen Kräfte bei Erschütterungen und Vibrationen verringert werden. In besonders vorteilhafter Weise ist die Ausbildung hiebei so getroffen, daß der erste Antriebsmotor an der starr mit der Befestigungseinrichtung verbundenen ersten Tragplatte angeordnet ist, wobei das Stellglied dieses ersten Antriebsmotors für die Verschwenkung des Spiegels an der zweiten Tragplatte angreift, und daß der zweite Antriebsmotor an der zweiten Tragplatte festgelegt ist, an welcher der Spiegel bzw. das Spiegelgehäuse quer zur Sckwenkachse der zweiten Tragplatte schwenkbar angelenkt ist und mit dem Stellglied des zweiten Antriebsmotors zusammenwirkt. Die voneinander gesonderten Schwenkachsen können bei einer derartigen Unterteilung der Kinematik und Aufteilung der Schwenkbarkeit auf die jeweiligen Anlenkachsen an den beiden Tragplatten an mehreren, in bestand voneinander angeordneten Lagerpunkten, gelagert werden, wodurch die jeweils in den einzelnen Lagern auftretenden Lagerkräfte wesentlich herabgesetzt werden, sodaß eine Überlastung der Lager und ein vorzeitiger Verschleiß der Lager verhindert werden kann. Die Ausbildung unter Verwendung zweier Tragplatten ermöglicht aber darüber hinaus eine Auslegung und Anordnung der Anlenkachsen in einer Weise, daß dynamische Effekte prinzipiell zu einer geringeren Lagerbelastung führen, wobei zu diesem Zweck die Ausbildung mit Vorteil so getroffen ist, daß die Schwenkachsen der zweiten Tragplatte und des Spiegels bzw. des Spiegelgehäuses einander nahe dem oder im-Schwerpunkt des Spiegels bzw. des Spiegelgehäuses schneiden. Durch die Maßahme, die Sckwenkachsen so anzuordnen, daß sie einander nahe dem oder im Schwerpunkt des Spiegels bzw. Spiegelgehäuses schneiden, wird eine Spiegelaufhängung realisiert, bei welcher die Antriebsmotoren von außermittigen Kräften weitestgehend entlastet werden und eine Überlastung der Antriebsmotoren wirkungsvoll verhindert werden kann. Schließlich wird durch eine derartige Ausbildung die Möglichkeit von Vibrationen des Spiegels wesentlich behindert.

Gemäß einer weiteren bevorzugten Ausbildung des erfindungsgemäßen, motorisch verstellbaren Spiegels ist diese so getroffen, daß die zweite Tragplatte nahe oder an zwei einander gegenüberliegenden Seiten Lager für die Schwenkachse des Spiegels bzw. des Spiegelgehäuses relativ zur zweiten Tragplatte und an zwei weiteren einander gegenüberliegenden Seiten weitere Lager für eine im wesentlichen normal zu dieser Schwenkachse verlaufende Schwenkachse der zweiten Tragplatte relativ zur ersten Tragplatte trägt. Auf diese Weise wird sichergestellt, daß die Schwenkachsen in relativ großem Abstand voneinander gelagert werden, wodurch die jeweils im Lager aufzunehmenden Kräfte wesentlich verringert werden können. Eine analoge Verbesserung der Kraftaufnahme für die von der zweiten Schwenkachse aufzunehmenden Krafte läßt sich dadurch erzielen, daß der Spiegel bzw. das Spiegelgehäuse an der zweiten Tragplatte um seine längere Achse schwenkbar gelagert ist und daß die Schwenklager nahe den einander gegenüberliegenden Seiten der zweiten Tragplatte angeordnet sind.

In besonders einfacher Weise kann die Ausbildung hiebei so getroffen sein, daß die Lager der zweiten Tragplatte in im wesentlichen normal zur zweiten Tragplatte stehenden Lageraugen angeordnet sind, welche sich von der zweiten Tragplatte in Richtung zum Spiegelglas erstrecken. Der Zusammenbau des Spiegels und damit auch die Zugänglichkeit für Wartungsarbeiten läßt sich dadurch noch wesentlich vereinfachen, daß die Ausbildung so getroffen ist, daß das Spiegelgehäuse sich einwärts erstreckende Lagerarme aufweist, welche über Lagerbolzen mit zwei einander gegenüberliegenden Lagern der zweiten Tragplatte verbunden sind, wobei in vorteilhafter Weise die erste Tragplatte sich einwärts erstreckende Lageraugen aufweist, welche die Lager der zweiten Tragplatte umgreifen, und wobei die zweite Tragplatte eine Durchbrechung für den Durchtritt des ersten an der ersten Tragplatte festgelegten Antriebsmotors aufweist. Alle diese Maßnahmen erleichtern den Zusammenbau und stellen gleichzeitig sicher, daß eine besonders flache Ausbildung erzielt werden kann.

Um eine Voreinstellung des Spiegels zu erleichtern, kann die Ausbildung in an sich bekannter Weise so getroffen sein, daß die erste Tragplatte relativ zu einem Rahmenholm des Kraftfahrzeuges um wenigstens eine Achse schwenkbar und in ihrer Schwenklage festlegbar befestigt ist. Die auf diese Weise mögliche Grundeinstellung gewährleistet einen großen variablen Sichtfeldbereich bei motorischer Verstellung.

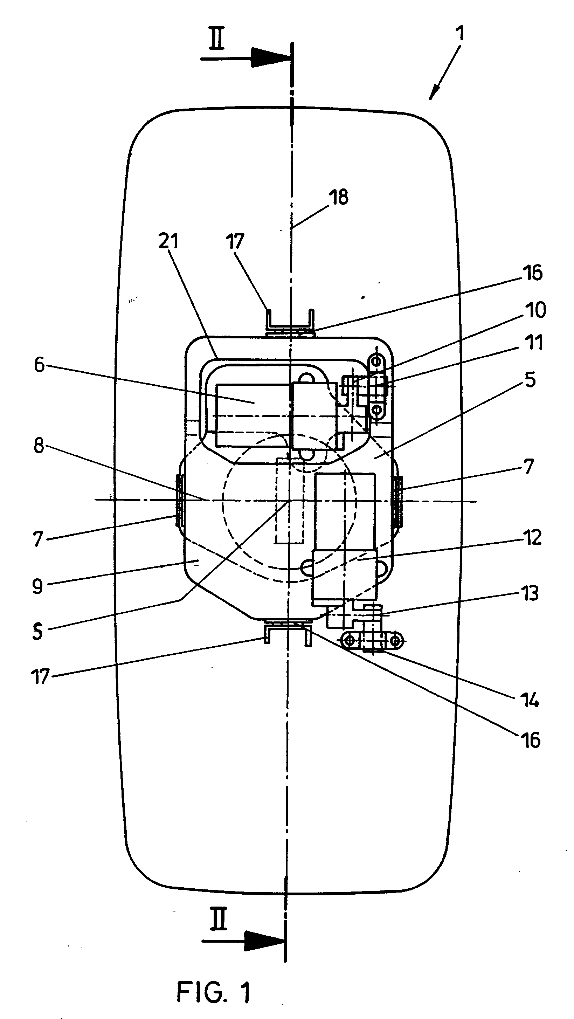

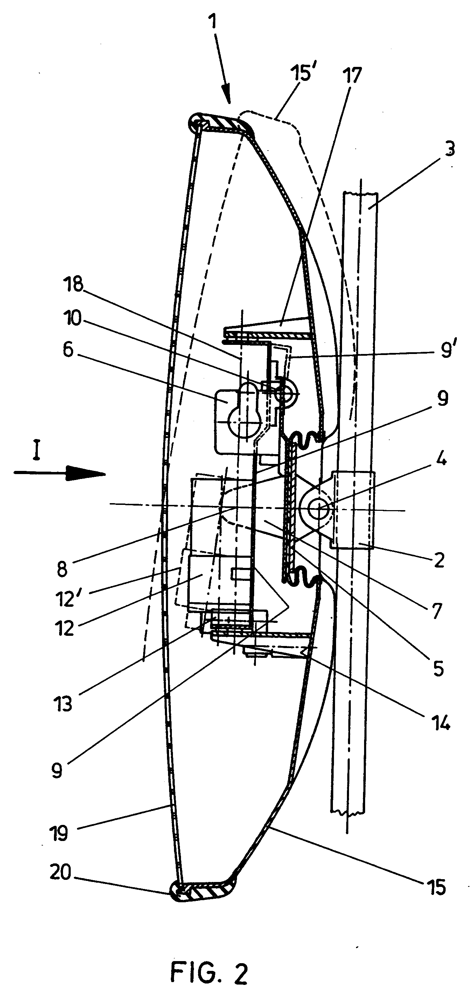

Die Erfindung wird nachfolgend anhand eines in der Zeichnung schematisch dargestellten Ausführungsbeispieles näher erläutert. In dieser zeigen Fig.1 eine Ansicht auf einen erfindungsgemäßen, motorisch verstellbaren Spiegel bei abgenommenem Spiegelglas; und Fig.2 einen Schnitt nach der Linie 11-11 der Fig.1, wobei Fig.1 eine Ansicht in Richtung des Pfeiles I der Fig.2 darstellt.

Bei dem in Fig.1 und 2 dargestellten motorisch verstellbaren Rückspiegel ist der Spiegel 1 über eine Befestigungseinrichtung 2 an einem Halterohr 3 in verschiedenen Lagen festlegbar montiert, wobei dieses Halterohr mit dem Rahmen des Fahrzeuges, beispielsweise mit der Tür eines LKW, verbunden ist. Mit der Befestigungseinrichtung 2 ist um eine Achse 4 sowie um das Rohr 3 schwenkbar und in der Schwenklage festlegbar eine erste Tragplatte 5 verbunden, welche einen ersten Antriebsmotor, beispielsweise Elektromotor, 6 trägt. Die Tragplatte 5 weist an zwei einander gegenüberliegenden Seiten Lager bzw. Lageraugen 7 auf, an welchen um eine Schwenkachse 8, welche im dargestellten Ausführungsbeispiel im wesentlichen horizontal verläuft, eine zweite Tragplatte 9 schwenkbar gelagert ist. Die Verschwenkung der zweiten Tragplatte 9 relativ zur ersten Tragplatte 5 erfolgt durch den Antriebsmotor bzw. Stellmotor 6 über ein Stellglied 10, welches außerhalb der Achse 8 bei 11 an der zweiten Tragplatte 9 angreift. Die zweite Tragplatte trägt einen zweiten Antriebsmotor bzw. Stellmotor 12, welcher über ein ähnliches Stellglied 13 bei 14 an der Rückwand des Spiegelgehäuses 15 angreift. Die zweite Tragplatte 9 trägt wiederum an zwei im wesentlichen gegenüberliegenden Seiten Lager bzw. Lageraugen 16, welche mit von der Rückseite des Spiegelgehäuses 15 vorragenden Lagerarmen 17 zusammenwirken, wobei insgesamt bei der dargestellten Ausführungsform eine im wesentlichen vertikale Schwenkachse 18 definiert wird, welche auf die erste Schwenkachse 8 zwischen der ersten Tragplatte 5 und der zweiten Tragplatte 9 im wesentlichen normal steht. Bei einer Betätigung des zweiten Stellmotors 12 erfolgt über das Stellglied 13 eine Verschwenkung des Spiegelgehäuses 15 um die im wesentlichen vertikale Achse 18 . In Fig.2 ist strichliert mit 15′ bzw. 12′ und 9′ eine um die im wesentlichen horizontale Schwenkachse 8 verschwenkte Stellung angedeutet.

Die durch die Lager definierten Schwenkachsen 8 und 18 verlaufen im wesentlichen in einer gemeinsamen Ebene, wie dies insbesonders aus Fig.2 deutlich ersichtlich ist, und es liegt der Schnittpunkt S der Achsen 8 und 18 im wesentlichen im oder nahe dem Schwerpunkt des beweglichen Teiles des Spiegels 1 bzw. des Spiegelgehäuses 15. Das Spiegelglas 19 wird im Spiegelgehäuse 15 über eine Dichtmanschette 20 gehalten.

Für eine möglichst platzsparende, konstruktiv einfache Anordnung der Schwenkachsen 8 und 18 in einer gemeinsamen Ebene ragen die Lagerstellen 7 von der ersten Tragplatte 5 in Richtung zum Spiegelglas 19 vor und es weist weiters die zweite Tragplatte 9 eine Ausnehmung bzw. Durchbrechung 21 auf, durch welche der auf der ersten Tragplatte 5 angeordnete Motor 6 hindurchtreten kann. Daher ergibt sich insgesamt eine flache Ausbildung des gesamten Spiegels und es können die Motoren in für eine Gleichverteilung der gesamten Masse günstiger Weise versetzt zueinander angeordnet werden. Weiters ergibt sich deutlich, daß die Lagerstellen für die Verschwenkung um zwei im wesentlichen normal aufeinander stehende Richtungen weit voneinander getrennt sind und sehr einfach ausgebildet sein können, da im Gegensatz zum bekannten Stand der Technik auf ein Kugelgelenk verzichtet werden kann, welches beide Bewegungsrichtungen gleichzeitig ermöglichen sollte.

Gegebenenfalls auftretende Vibrationen, welche insbesondere bei Verwendung des Spiegels an einem Lastkraftwagen durch Motorvibrationen hervorgerufen werden können, werden nicht nur durch die Tatsache, daß die in einer gemeinsamen Ebene liegenden Schwenkachsen einander im oder nahe dem Schwerpunkt des beweglichen Teiles des Spiegels 1 kreuzen, weitestgehend vermieden, sondern es wird durch die Trennung der Schwenkachsen 8 und 18 und die Anordnung von zwei voneinander getrennten und miteinander schwenkbar verbundenen Tragplatten 5 bzw. 9 und die Anordnung lediglich eines Motors 12 an der zweiten Tragplatte 9 dafür Sorge getragen, daß eine kleine und relativ leichte zweite Tragplatte 9 Verwendung finden kann, welche als beweglicher Teil nur lediglich einen Stellmotor 12 trägt. Es ergibt sich insgesamt durch die Trennung der Drehachsen 8 bzw. 18 sowie die weit voneinander auseinanderliegende Anordnung der Lagerstellen die Möglichkeit, die Motoren 6 bzw. 12 zentral anzuordnen, ohne die Tiefe des gesamten Spiegelgehäuses zu vergrößern. Insgesamt ergeben sich einfache Lagerungen, da ein Lager jeweils nur in einer Richtung beansprucht wird bzw. eine Schwenkbewegung um eine Richtung erlauben muß, da die Verstellungen um die beiden im wesentlichen normal aufeinanderstehenden Richtung vollkommen unabhängig voneinander erfolgen. Es ergibt sich weiters die Möglichkeit großer Verstellwinkel durch eine gute Ausnutzung der Verstellhübe oder Stellmomente der beiden Stell- bzw. Antriebsmotoren 6 bzw. 12

Eine Spiegelgrundeinstellung wird dabei über die schwenkbare Festlegung der ersten Tragplatte 5 an der Befestigungseinrichtung 2 nach Lösen der Befestigungseinrichtung ermöglicht.

In den Stellmotoren 6 bzw. 12 sind günstigerweise Rutschkupplungen vorgesehen, sodaß der Spiegel auch manuell von außen verstellt werden kann, ohne eine Beschädigung der Motoren zu bewirken.

Bei einer vereinfachten Ausführungsform kann durch Ersetzen jeweils eines Motors und eines Stellgliedes durch ein starres Verbindungsglied eine Verschwenkung des Spiegels um eine Achse erzielt werden.

## Patentansprüche

1. Motorisch verstellbarer Spiegel (1) mit einer Befestigungseinrichtung (2) zur Befestigung an einem Kraftfahrzeug (3), insbesondere Rückspiegel für einen LKW, wobei der Spiegel (1) über zwei voneinander getrennte Antriebsmotoren (6,12) um einander kreuzende Schwenkachsen (8,18) schwenkbar angetrieben ist, dadurch gekennzeichnet, daß eine erste Tragplatte (5) für den Spiegel (1) starr mit der Befestigungseinrichtung (2) verbunden ist, daß an dieser ersten Tragplatte (5) eine zweite Tragplatte (9) um eine Achse (8) schwenkbar gelagert ist, an welcher zweiten Tragplatte (9) der Spiegel bzw. das Spiegelgehäuse (1,15) um eine weitere Achse (18) schwenkbar gelagert ist, und daß je ein Antriebsmotor (6,12) sowie ein Stellglied (10,13) für die Verstellbewegung zwischen erster und zweiter Tragplatte (5,9) und zwischen zweiter Tragplatte (9) und Spiegel bzw. Spiegelgehäuse (1,15) angeordnet sind.

2. Spiegel nach Anspruch 1, dadurch gekennzeichnet, daß der erste Antriebsmotor (6) an der starr mit der Befestigungseinrichtung (2) verbundenen ersten Tragplatte (5) angeordnet ist, wobei das Stellglied (10) dieses ersten Antriebsmotors (6) für die Verschwenkung des Spiegels (1) an der zweiten Tragplatte (9) angreift, und daß der zweite Antriebsmotor (12) an der zweiten Tragplatte (9) festgelegt ist, an welcher der Spiegel bzw. das Spiegelgehäuse (1,15) quer zur Schwenkachse (8) der zweiten Tragplatte (9) schwenkbar angelenkt ist und mit dem Stellglied (13) des zweiten Antriebsmotors (12) zusammenwirkt.

3. Spiegel nach Anspruch 1 oder 2, dadurch gekennzeichnet, daß die Schwenkachsen (8,18) der zweiten Tragplatte (9) und des Spiegels bzw. des Spiegelgehäuses (1,15) einander nahe dem oder im Schwerpunkt (S) des Spiegels bzw. des Spiegelgehäuses (1,15) schneiden.

4. Spiegel nach Anspruch 1, 2 oder 3, dadurch gekennzeichnet, daß die zweite Tragplatte (9) nahe oder an zwei einander gegenüberliegenden Seiten Lager (17) für die Schwenkachse (18) des Spiegels bzw. des Spiegelgehäuses (1,15) relativ zur zweiten Tragplatte (9) und an zwei weiteren einander gegenüberliegenden Seiten weitere Lager (7) für eine im wesentlichen normal zu dieser Schwenkachse (18) verlaufende Schwenkachse (8) der zweiten Tragplatte (9) relativ zur ersten Tragplatte (5) trägt.

5. Spiegel nach einem der Ansprüche 1 bis 4, dadurch gekennzeichnet, daß der Spiegel bzw. das Spiegelgehäuse (1,15) an der zweiten Tragplatte (9) um seine längere Achse schwenkbar gelagert ist und daß die Schwenklager (16) nahe den einander gegenüberliegenden Seiten der zweiten Tragplatte (9) angeordnet sind.

6. Spiegel nach einem der Ansprüche 1 bis 5, dadurch gekennzeichnet, daß die Lager (16) der zweiten Tragplatte (9) in im wesentlichen normal zur zweiten Tragplatte (9) stehenden Lageraugen angeordnet sind, welche sich von der zweiten Tragplatte (9) in Richtung zum Spiegelglas erstrecken.

7. Spiegel nach einem der Ansprüche 1 bis 6, dadurch gekennzeichnet, daß das Spiegelgehäuse (15) sich einwärts erstreckende Lagerarme (17) aufweist, welche über Lagerbolzen mit zwei einander gegenüberliegenden Lagern (16) der zweiten Tragplatte (9) verbunden sind.

8. Spiegel nach einem der Ansprüche 1 bis 7, dadurch gekennzeichnet, daß die erste Tragplatte (5) sich einwärts erstreckende Lageraugen (7) aufweist, welche die Lager der zweiten Tragplatte (9) umgreifen und daß die zweite Tragplatte (9) eine Durchbrechung (21) für den Durchtritt des ersten an der ersten Tragplatte (5) festgelegten Antriebsmotors (6) aufweist.

9. Spiegel nach einem der Ansprüche 1 bis 8, dadurch gekennzeichnet, daß die erste Tragplatte (5) relativ zu einem Rahmenholm (3) des Kraftfahrzeuges um wenigstens eine Achse schwenkbar und in ihrer Schwenklage festlegbar befestigt ist.

## Claims

1. Mirror (1) which can be adjusted by means of a motor and having a securing device (2) for securing to a motor vehicle (3), in particular a rear view mirror for a lorry, the mirror (1) being driven by two separate drive motors (6, 12) such that it can pivot about intersecting pivot axes (8, 18), characterised in that a first support plate (5) for the mirror (1) is rigidly connected to the securing device (2); in that there is mounted on this first support plate (5) a second support plate (9) which can pivot about an axis (8) and on which the mirror or mirror housing (1, 15) is mounted so as to pivot about a further axis (18); and in that one drive motor (6, 12) and one adjusting member (10, 13) in each case are disposed for the adjusting movement between the first and second support plates (5, 9) and between the second support plate (9) and the mirror or mirror housing (1, 15).

2. Mirror according to Claim 1,
characterised in that the first drive motor (6) is disposed on the first support plate (5) which is rigidly connected to the securing device (2), the adjusting member (10) of this first drive motor (6) acting on the second support plate (9) in order to pivot the mirror (1); and in that the second drive motor (12) is secured to the second support plate (9) on which the mirror or mirror housing (1, 15) is hinged so as to pivot transversely to the pivot axis (8) of the second support plate (9) and cooperates with the adjusting member (13) of the second drive motor (12).

3. Mirror according to Claim 1 or 2,
characterised in that the pivot axes (8, 18) of the second support plate (9) and of the mirror or of the mirror housing (1, 15) intersect one another in the vicinity of or at the centre of gravity (S) of the mirror or of the mirror housing (1, 15).

4. Mirror according to Claim 1, 2 or 3,
characterised in that, in the vicinity of or on two opposite sides, the second support plate (9) carries bearings (17) for the pivot axis (18) of the mirror or of the mirror housing (1, 15) relative to the second support plate (9) and, at two further opposite sides, further bearings (7) for a pivot axis (8) of the second support plate (9) extending substantially normal to this pivot axis (18) relative to the first support plate (5).

5. Mirror according to any one of Claims 1 to 4, characterised in that the mirror or mirror housing (1, 15) is mounted on the second support plate (9) so as to pivot about its longer axis; and in that the pivot bearings (16) are disposed in the vicinity of the opposite sides of the second support plate (9).

6. Mirror according to any one of Claims 1 to 5, characterised in that the bearings (16) of the second support plate (9) are disposed in bearing eyes which are substantially normal to the second support plate (9) and which extend from the second support plate (9) in the direction towards the mirror glass.

7. Mirror according to any one of Claims 1 to 6, characterised in that the mirror housing (15) comprises bearing arms (17) which extend inwards and which are connected via bearing bolts to two opposite bearings (16) of the second support plate (9).

8. Mirror according to any one of Claims 1 to 7, characterised in that the first support plate (5) comprises bearing eyes (7) which extend inwards and which embrace the bearings of the second support plate (9); and in that the second support plate (9) comprises an aperture (21) for the passage of the first drive motor (6) secured to the first support plate (5).

9. Mirror according to any one of Claims 1 to 8, characterised in that the first support plate (5) is secured relative to a frame spar (3) of the motor vehicle such that it can pivot about at least one axis and be secured in its pivoted position.

## Revendications

1. Miroir réglable motorisé (1) comportant un dispositif de fixation (2) pour la fixation de celui-ci sur un véhicule automobile (3) et, plus particulièrement, rétroviseur pour un camion, dans lequel le miroir (1) est actionné par deux moteurs d'entraînement distincts (6, 12) avec faculté de pivotement autour d'axes en intersection (8, 18), caractérisé en ce qu'une première plaque d'appui (5) pour le miroir (1) est reliée de manière fixe au dispositif de fixation (2), en ce qu'une deuxième plaque d'appui (9) est disposée sur cette première plaque d'appui (5) avec faculté de pivotement autour d'un axe (8), le miroir ou l'habillage du miroir (1, 15) étant disposé sur ladite deuxième plaque d'appui (9) avec faculté de pivotement autour d'un axe (18) supplémentaire, et en ce qu'il est disposé pour chacun des mouvements relatifs de la première par rapport à la deuxième plaque d'appui (5, 9) ainsi que de la deuxième plaque d'appui (9) par rapport au miroir ou à l'habillage du miroir (1, 15) un moteur d'actionnement (6, 12), et un vérin (10, 13).

2. Miroir selon la revendication 1, caractérisé en ce que le premier moteur d'actionnement (6) est disposé sur la première plaque d'appui (5) laquelle est reliée rigidement au dispositif de fixation (2), le vérin (10) de ce premier moteur d'actionnement (6) actionnant la deuxième plaque d'appui (9) pour entraîner le miroir (1) en pivotement, et en ce que le deuxième moteur d'actionnement (12) est fixé rigidement sur la deuxième plaque d'appui (9), sur laquelle le miroir ou l'habillage du miroir (1, 15), est articulé à pivotement transversal par rapport à l'axe de pivotement (8) de la deuxième plaque d'appui (9) et qui agit de manière concourante avec le vérin (13) du deuxième moteur d'actionnement (12).

3. Miroir selon la revendication 1 ou 2, caractérisé en ce que les axes de pivotement (8, 18) de la deuxième plaque d'appui (9) du miroir ou de l'habillage du miroir (1, 15), se coupent au centre de gravité (S), ou à proximité du centre de gravité, du miroir ou de l'habillage du miroir (1, 15).

4. Miroir selon la revendication 1, 2 ou 3, caractérisé en ce que la deuxième plaque d'appui (9) est munie à proximité de, ou sur, deux côtés opposés, de supports (17) pour l'axe de pivotement (18) du miroir ou de l'habillage du miroir (1, 15) relativement à la deuxième plaque d'appui (9) et sur deux autres côtés opposés, d'autres supports (7) pour un axe de pivotement (8) de la deuxième plaque d'appui (9) relativement à la première plaque d'appui (5) disposé essentiellement perpendiculaire à cet axe de pivotement (18).

5. Miroir selon l'une quelconque des revendications 1 à 4, caractérisé en ce que le miroir ou l'habillage du miroir (1, 15) est disposé sur la deuxième plaque d'appui (9) avec faculté de pivotement autour de son axe le plus long et en ce que les supports de pivotement (16) sont disposés à proximité des côtés opposés de la deuxième plaque d'appui (9).

6. Miroir selon l'une quelconque des revendications 1 à 5, caractérisé en ce que les supports (16) de la deuxième plaque d'appui (9) sont logés dans des alésages essentiellement perpendiculaires à la deuxième plaque d'appui (9) et s'étendant depuis la deuxième plaque d'appui (9) en direction du verre du miroir.

7. Miroir selon l'une quelconque des revendications 1 à 6, caractérisé en ce que l'habillage du miroir (15) comprend des bras de support (17) s'étendant vers l'intérieur, lesquels sont attachés par des axes à deux supports opposés (16) de la deuxième plaque d'appui (9).

8. Miroir selon l'une quelconque des revendications 1 à 7, caractérisé en ce que la première plaque d'appui (5) est munie de supports (7) s'étendant vers l'intérieur et enfermant les supports de la deuxième plaque d'appui (9) et en ce que la deuxième plaque d'appui (9) comporte une découpe de passage (21) pour le passage du premier moteur d'actionnement (6) fixé sur la première plaque d'appui (5).

9. Miroir selon l'une quelconque des revendications 1 à 8, caractérisé en ce que la première plaque d'appui (5) est montée avec faculté de pivotement autour d'un axe au moins par rapport à un montant (3) du véhicule et avec possibilité de l'arrêter dans une position de pivotement.
